# EUROPÄISCHE PATENTSCHRIFT

(11) **EP 1 031 820 B1**
(45) Veröffentlichungstag und Bekanntmachung des Hinweises auf die Patenterteilung: **05.07.2006**
(21) Anmeldenummer: 00101846.4
(22) Anmeldetag: 31.01.2000
(51) Int. Cl.: G01F 1/60

(54) **Magnetisch-induktives Durchflussmessgerät**
Magnetic inductive flowmeter
Débitmètre électromagnétique

(30) Priorität: 23.02.1999 DE 19907864
(43) Veröffentlichungstag der Anmeldung: 30.08.2000
(73) Patentinhaber: KROHNE MESSTECHNIK GMBH & CO. KG, 47058 Duisburg (DE)
(72) Erfinder: Florin, Wilhelm, Dipl.-Ing., 47198 Duisburg (DE)
(74) Vertreter: Gesthuysen, von Rohr & Eggert

(56) Entgegenhaltungen:
- WO-A-89/11123
- DE-A- 19 713 751
- GB-A- 2 324 606
- US-A- 4 204 240

## Beschreibung

Die Erfindung betrifft ein magnetisch-induktives Durchflußmeßgerät für strömende Medien, mit einem Meßrohr, einem der Erzeugung eines zumindest im wesentlichen senkrecht zur Meßrohrachse verlaufenden Magnetfeldes dienenden, eine Feldspule aufweisenden Elektromagneten, einer der Versorgung der Feldspule des Elektromagneten mit einem geschalteten Gleichstrom als Feldstrom dienenden Stromquelle, mindestens zwei entlang einer zumindest im wesentlichen senkrecht zur Meßrohrachse und zur Magnetfeldrichtung verlaufenden Verbindungslinie angeordneten Meßelektroden und einer die Meßspannung der Meßelektroden auswertenden, ein Durchflußsignal erzeugenden Auswerteschaltung, wobei vorzugsweise ein den Feldstrom regelnder Stromregler und/oder ein die Spannung an der Feldspule des Elektromagneten steuernder oder regelnder Schaltregler und eine der Feldspule des Elektromagneten vorgeschaltete Umschaltbrücke vorgesehen sind bzw. ist und wobei eine Zusatzstromquelle vorgesehen ist. die Zusatzstromquelle eine Zusatzspannungsquelle aufweist und mittels der Zusatzstromquelle unmittelbar zu Beginn einer jeden Halbwelle des als geschalteter Gleichstrom vorliegenden Feldstroms ein Zusatzstrom in die Feldspule des Elektromagneten einspeisbar ist.

Das grundlegende Prinzip des magnetisch-induktiven Durchflußmeßgerätes für strömende Medien geht bereits auf Faraday zurück, der im Jahr 1832 vorgeschlagen hat, das Prinzip der elektrodynamischen Induktion zur Strömungsgeschwindigkeitsmessung anzuwenden. Nach dem Faraday'schen Induktionsgesetz entsteht in einem strömenden Medium, welches Ladungsträger mit sich führt und durch ein Magnetfeld fließt, eine elektrische Feldstärke senkrecht zur Strömungsrichtung und zum Magnetfeld. Dieses Gesetz wird bei einem magnetisch-induktiven Durchflußmesser dadurch genutzt, daß ein Magnet, regelmäßig bestehend aus zwei Magnetspulen, ein Magnetfeld senkrecht zur Strömungsrichtung in dem Meßrohr erzeugt. Innerhalb dieses Magnetfeldes liefert jedes sich durch das Magnetfeld bewegende Volumenelement des strömenden Mediums mit der in diesem Volumenelement entstehenden Feldstärke einen Beitrag zu der über die Meßelektroden abgegriffenen Meßspannung. Die Meßelektroden werden bei den bekannten magnetisch-induktiven Durchflußmeßgeräten so ausgeführt, daß sie entweder galvanisch oder kapazitiv mit dem strömenden Medium gekoppelt sind. Ein besonderes Merkmal der magnetisch-induktiven Durchflußmeßgeräte ist die Proportionalität zwischen der Meßspannung und der über den Querschnitt des Rohres gemittelten Strömungsgeschwindigkeit des Mediums, d. h. zwischen Meßspannung und Volumenstrom.

Magnetisch-induktive Durchflußmeßgeräte sind im industriellen Bereich anfangs mit einem magnetischen Wechselfeld betrieben worden. Aus Kostengründen ist dabei der Elektromagnet zur Erzeugung des Magnetfeldes an das vorhandene Wechselspannungsnetz angeschlossen worden, so daß das Magnetfeld im wesentlichen sinusförmig seine Stärke ändert. Bei diesen mit Wechselspannung betriebenen magnetisch-induktiven Durchflußmeßgeräten werden die Schwankungen im Wechselspannungsnetz unmittelbar an den Elektromagneten weitergegeben, und sie gehen somit voll in die Meßgenauigkeit des magnetisch-induktiven Durchflußmeßgerätes ein. Um dennoch eine annehmbare Meßgenauigkeit zu gewährleisten, ist es für magnetisch-induktive Durchflußmeßgeräte, die mit einem magnetischen Wechselfeld betrieben werden, bekannt, am Elektromagneten Referenzwicklungen anzuordnen und die in die- .. sen Referenzwicklungen dann induzierten Spannungen zur Korrektur der Meßspannungen an den Meßelektroden heranzuziehen.

Die bekannten magnetisch-induktiven Durchflußmeßgeräte, die mit einem magnetischen Wechselfeld arbeiten, sind dadurch problematisch, daß die an den Meßelektroden anliegende Meßspannung zwangsläufig die Frequenz des Wechselspannungsnetzes aufweist. In der Praxis treten jedoch auch netzfrequente Störspannungen an den Meßelektroden auf, hervorgerufen z. B. durch axiale elektrische Ströme in dem strömenden Medium, diese wiederum verursacht beispielsweise durch die Erdung von Pumpen an den angrenzenden Rohrleitungen; diese Störspannungen sind dann den nach dem Faraday'schen Induktionsgesetz entstehenden Meßspannungen überlagert. Diese Problematik führt dazu, daß bei magnetisch-induktiven Durchflußmeßgeräten, die mit einem magnetischen Wechselfeld arbeiten, hohe Meßgenauigkeiten kaum zu gewährleisten sind, so daß diese im industriellen Bereich nur begrenzt einsetzbar sind.

Seit Mitte der 70er Jahre setzen sich zunehmend magnetisch-induktive Durchflußmeßgeräte durch, die mit einem geschalteten magnetischen Gleichfeld arbeiten, bei denen also mit einem geschalteten Gleichstrom als Feldstrom gearbeitet wird. Diese Durchflußmeßgeräte vermeiden eine Vielzahl der mit den magnetisch-induktiven Durchflußmeßgeräten, die mit einem Wechselfeld arbeiten, verbundenen Probleme und ermöglichen so sehr hohe Meßgenauigkeiten im Bereich von bis zu einem Promille.

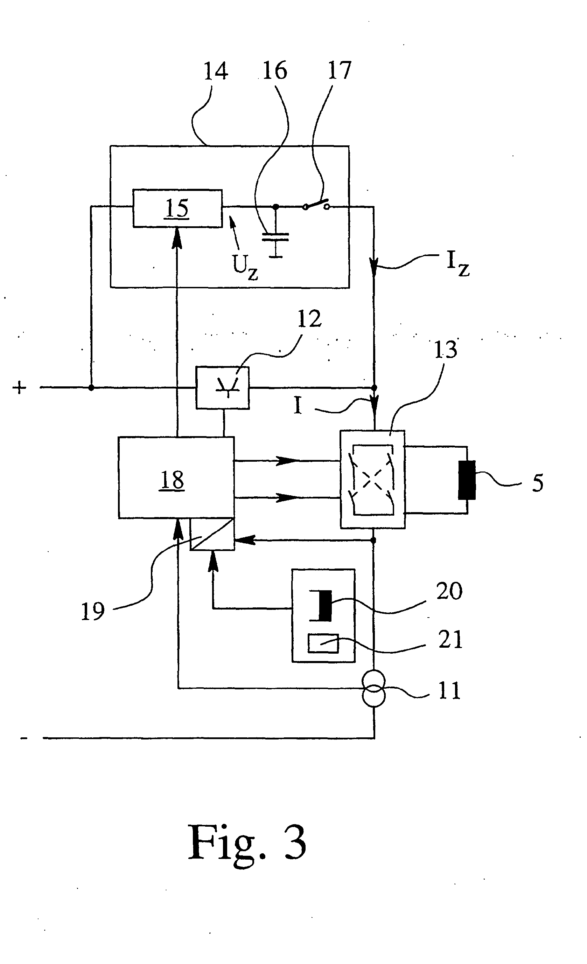

Magnetisch-induktiven Durchflußmeßgeräte, die mit einem geschalteten magnetischen Gleichfeld arbeiten, erhalten daraus Vorteile, daß das Magnetfeld in der Meßphase konstant ist. Nun läßt sich kein Magnetfeld in der Zeit Null von einem Zustand in den anderen bringen. Das liegt in der Natur der Sache, da sich in dem Magnetfeld Energie befindet, die dem Magnetfeld erst entzogen und dann für die umgekehrte Polarität wieder zugeführt werden muß (vgl. Fig. 3 der deutschen Offenlegungsschrift 197 13 751). Es ergeben sich also Umschaltphasen, in denen das Magnetfeld nicht konstant ist und in denen daher auch nicht genau gemessen werden kann. Diese Umschaltphasen sind vor allem aus zwei Gründen störend. Zum einen kann während der Umschaltphase nicht gemessen werden; es entsteht eine Totzeit. Zum anderen ist es aufgrund der vom Kehrwert der Feldfrequenz abhängigen Störungen, die von den Meßelektroden kommen, wünschenswert, mit einer möglichst hohen Feldfrequenz zu arbeiten; die Feldfrequenz ist jedoch durch die zeitliche Dauer der Umschaltphasen begrenzt.

Aus der GB-A-2 324 606 ist ein mit einem geschalteten magnetischen Gleichfeld arbeitendes Durchflußmeßgerät bekannt, das zur Verkürzung der beschriebenen Umschaltphasen eine Zusatzstromquelle einsetzt. Mit der Zusatzstromquellewird jeweils zu Beginn einer jeden Halbwelle des Feldstromes ein Zusatzstrom in die Feldspule des Elektromagneten eingespeist und so ein beschleunigter Wechsel des magnetischen Feldes erzielt.

Bei allen beschriebenen Duchflußmeßgeräten häng_t die Genauigkeit der Messung von verschiedenen Parametern ab, wie z. B. unmittelbar von der Induktivität und dem Widerstand der Feldspule des Elektromagneten. Wenn sich diese Parameter z. B. durch Temperatureinfluß verändern, hat dies direkte Auswirkung auf die Genauigkeit der Messung.

Der Erfindung liegt folglich die Aufgabe zugrunde, das in Rede stehende, zuvor im einzelnen erläuterte magnetisch-induktive Durchflußmeßgerät so auszugestalten und weiterzubilden, daß die zuvor erläuterten, systembedingten Umschaltphasen kürzer sind als bei den im Stand der Technik bekannten magnetisch-induktiven Durchflußmeßgeräten, so daß die Feldfrequenz, also die Frequenz, mit der das magnetische Gleichfeld umgeschaltet wird, erhöht werden kann.

Das erfindungsgemäße magnetisch-induktive Durchflußmeßgerät, bei dem die zuvor hergeleitete und aufgezeigte Aufgabe gelöst ist, ist nun zunächst und im wesentlichen dadurch gekennzeichnet, daß die Spannung der Zusatzspannungsquelle in Abhängigkeit von der Induktivität und von dem Widerstand der Feldspule des Elektromagneten steuerbar ist.

Bisher ist immer von einem Elektromagneten und von einer Feldspule des Elektromagneten gesprochen worden. Das berücksichtigt, daß üblicherweise zu einem Elektromagneten neben der Feldspule noch ein bei vorgegebener magnetischer Feldstärke die magnetische Induktion und den magnetischen Fluß erhöhendes Bauteil gehört, häufig als Spulenkern ausgeführt und häufig mit einem Polschuh versehen. Funkti onsnotwendig ist für einen Elektromagneten jedoch nur eine Feldspule; eine Feldspule kann also für sich einen Elektromagneten darstellen. Folglich wird im folgenden auch gelegentlich nur von der Feldspule, also nicht von der Feldspule des Elektromagneten und nicht vom Elektromagneten gesprochen.

Magnetisch-induktive Durchflußmeßgeräte der in Rede stehenden Art weisen in der Regel zwei Elektromagnete mit jeweils einer Feldspule auf. Funktionsnotwendig ist jedoch nur ein Elektromagnet bzw. eine Feldspule. Sind, wie üblich, zwei Elektromagnete mit jeweils einer Feldspule vorhanden, so sind üblicherweise die Feldspulen in Reihe geschaltet. Im folgenden wird jedoch häufig nur von einem Elektromagneten bzw. der Feldspule eines Elektromagneten bzw. einer Feldspule gesprochen. Das, was für die Erfindung nach Aufgabe und Lösung wesentlich ist, ist ja unabhängig davon, ob zwei Feldspulen vorliegen oder ob nur eine Feldspule vorliegt.

Legt man an eine Feldspule mit der Induktivität L und dem Widerstand R eine Gleichspannung an, so steigt der durch die Feldspule fließende Gleichstrom mit einer Zeitkonstanten an, die sich bestimmt aus dem Verhältnis der Induktivität L zum Widerstand R. Hat eine Feldspule eine vorgegebene Induktivität L, so ließe sich eine erwünschte kleine Zeitkonstante durch einen großen Widerstand R erreichen. Der Widerstand R einer Feldspule ist jedoch insgesamt von Nachteil, weil in ihm elektrische Leistung bzw. elektrische Energie verbraucht wird, was funktionsbedingt nicht erforderlich und folglich nicht erwünscht ist. Eine an sich erwünschte kleine Zeitkonstante für die Feldspule kann folglich nicht dadurch realisiert werden, daß der Widerstand R der Feldspule relativ groß gewählt wird.

Für den gewollten stationären Zustand, d. h. für den Feldstromsollwert I_{S}, wird nur die Spannung U benötigt, die sich aus dem ohm'chen Gesetz ergibt; die erforderliche Spannung U ist das Produkt aus dem Feldstromsollwert I_{S} und dem Widerstand R der Feldspule. Damit nun der Feldstromsollwert I_{S} schneller erreicht wird, wird im Stand der Technik im Umschaltzeitpunkt an die Feldspule eine Spannung U_{U} (U_{U} =Spannung im Umschaltzeitpunkt) angelegt, die größer als die für den Feldstromsollwert I_{S} stationär benötigte Spannung U ist. Dann muß dafür gesorgt werden, daß dann, wenn der Feldstrom I den Feldstromsollwert I_{S} erreicht hat, der Feldstrom I nicht weiter ansteigt; ohne eine den Feldstrom I beeinflussende Maßnahme würde dieser ja auf den Wert ansteigen, der sich aus der Spannung U_{U} und dem Widerstand R der Feldspule ergibt.

Zu den im Stand der Technik bekannten magnetisch-induktiven Durchflußmeßgeräten gehören nun sowohl ein den Feldstrom I auf den Feldstromsollwert I_{S} regelnder Stromregler als auch ein die Spannung U an der Feldspule des Elektromagneten steuernder oder regelnder Schaltregler. Würde man nur mit einem Stromregler arbeiten, so würde in diesem Stromregler die elektrische Leistung bzw. die elektrische Energie verbraucht, die sich ergibt aus dem Produkt aus der Differenz zwischen der Spannung U_{U} und der Spannung U einerseits sowie dem Feldstromsollwert I_{S} andererseits. Dadurch, daß man zusätzlich mit einem die Spannung U an der Feldspule des Elektromagneten steuernden oder regelnden Schaltregler arbeitet, wird sichergestellt, daß an dem Stromregler wesentlich weniger elektrische Leistung bzw. elektrische Energie verbraucht wird.

Das, was zuvor in Verbindung mit der Maßnahme "erhöhte Spannung U_{U} im Umschaltzeitpunkt" und in Verbindung damit mit einem Stromregler und gegebenenfalls zusätzlich mit einem Schaltregler erreicht wird, ist Stand der Technik. Erfindungsgemäß ist zusätzlich oder anstelle dessen, was zuvor erläutert worden ist, eine Zusatzstromquelle vorgesehen, mittels der unmittelbar zu Beginn einer jeden Halbwelle des als geschalteter Gleichstrom vorliegenden Feldstromes I - und nur für eine kurze Zeit - ein Zusatzstrom I_{Z} in die Feldspule einspeisbar ist. Mit diesem Zusatzstrom I_{Z} bzw. mit der damit verbundenen Energie wird dem Magnetfeld in relativ kurzer Zeit von der Energie, die vor dem Umschaltzeitpunkt im Magnetfeld noch enthalten ist, zusätzlich Energie entzogen, so daß die Umschaltphase, d. h. die Zeit zwischen dem Umschaltzeitpunkt und dem Erreichen des Feldstromsollwertes I_{S}, erheblich verkürzt werden kann.

Im einzelnen gibt es nun verschiedene Möglichkeiten, das zuvor von seiner grundsätzlichen Wirkungsweise her erläuterte erfindungsgemäße magnetisch-induktive Durchflußmeßgerät auszugestalten und weiterzubilden. Dazu wird verwiesen einerseits auf die dem Patentanspruch 1 nachgeordneten Patentansprüche, andererseits auf die Beschreibung eines bevorzugten Ausführungsbeispiels in Verbindung mit der Zeichnung. In der Zeichnung zeigen
- Fig. 1: eine schematische Darstellung zur allgemeinen Erläuterung eines magnetisch-induktiven Duchflußmeßgerätes,
- Fig. 2: schematisch, ein zu einem bekannten magnetisch-induktiven Durchflußmeßgerät gehörendes Schaltbild,
- Fig. 3: wiederum schematisch, ein zu einem bevorzugten Ausführungsbeispiel eines erfindungsgemäßen magnetisch-induktiven Durchflußmeßgerätes gehörendes Schaltbild und
- Fig. 4: eine graphische Darstellung zur Erläuterung der Lehre der Erfindung.

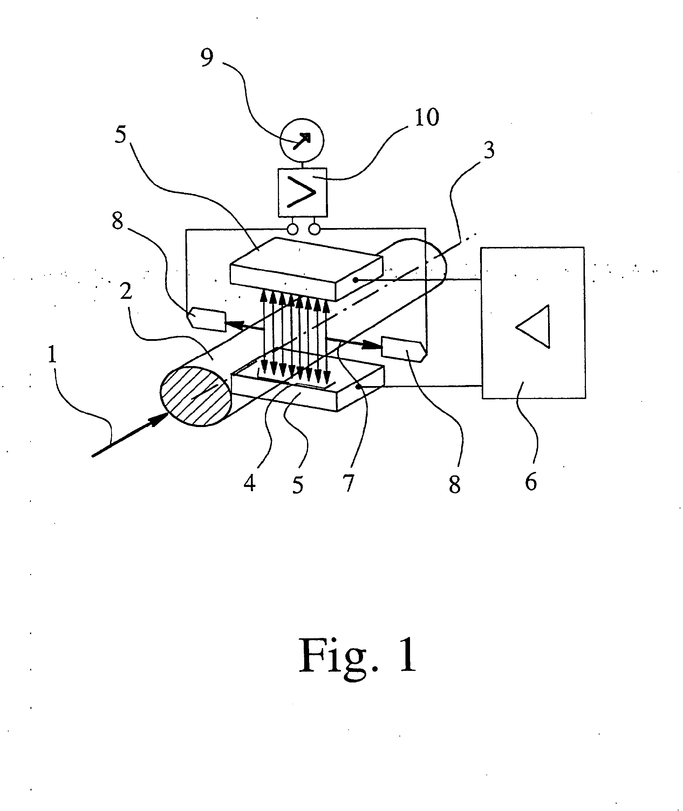

Wie die Fig. 1 zeigt, gehören zu magnetisch-induktiven Durchflußmeßgeräten für strömende Medien 1, mit einem Pfeil angedeutet, ein Meßrohr 2, ein der Erzeugung eines zumindest im wesentlichen senkrecht zur Meßrohrachse 3 verlaufenden Magnetfeldes 4 dienender, Feldspulen 5 aufweisender, im übrigen nicht dargestellter Elektromagnet, eine der Versorgung der Feldspulen 5 des Elektromagneten mit einem geschalteten Gleichstrom als Feldstrom I dienende Stromquelle 6, zwei entlang einer zumindest im wesentlichen senkrecht zur Meßrohrachse 3 und zur Magnetfeldrichtung verlaufenden Verbindungslinie 7 angeordnete Meßelektroden 8 und eine die Meßspannung der Meßelektroden 8 auswertende, ein Durchflußsignal, durch einen Pfeil 9 angedeutet, erzeugende Auswerteschaltung 10.

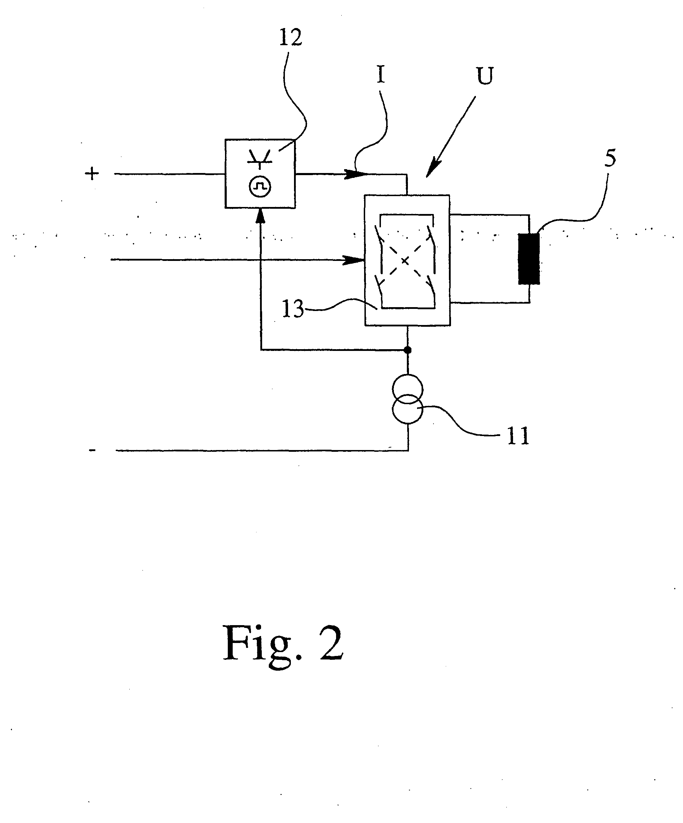

Im Stand der Technik, von dem die Erfindung ausgeht, gehören zu magnetisch-induktiven Duchflußmeßgeräten über das hinaus, was in Fig. 1 dargestellt ist, Maßnahmen bzw. Funktionseinheiten, die sich aus der Fig. 2 ergeben.

Für das in Fig. 2 schaltungsmäßig schematisch dargestellte magnetisch-induktive Durchflußmeßgerät gilt zunächst, daß ein Stromregler 11 vorgesehen ist, der den Feldstrom I - auf einen gewünschten Feldstromsollwert I_{S} - regelt. Zusätzlich ist ein die Spannung U an den Feldspulen 5 steuernder oder regelnder Schaltregler 12 vorgesehen. Dazu, welche Funktionen der Stromregler 11 und der Schaltregler 12 haben, wird auf die weiter oben gemachten Ausführungen verwiesen.

Die in Rede stehenden magnetisch-induktiven Durchflußmeßgeräte, die im Stand der Technik bekannten wie das erfindungsgemäße, arbeiten mit einem geschalteten magnetischen Gleichfeld. Es wird also dafür gesorgt, daß durch die Feldspulen 5 als Feldstrom I ein geschalteter Gleichstrom fließt. Das ist in beiden Ausführungsbeispielen, also sowohl bei dem zum Stand der Technik gehörenden Ausführungsbeispiel nach Fig. 2 als auch bei dem erfindungsgemäßen Ausführungsbeispiel nach Fig. 3, dadurch realisiert, daß den Feldspulen 5 eine Umschaltbrücke 13 vorgeschaltet ist. In den Feldspulen 5 wird also ein geschalteter Gleichstrom als Feldstrom I nicht dadurch realisiert, daß die Polarität der in den Fig. 2 und 3 nicht dargestellten Stromquelle 6 geändert wird, vielmehr werden die Feldspulen 5 mit Hilfe der Umschaltbrücke 13, die natürlich elektronisch ausgeführt ist, umgepolt.

Für das erfindungsgemäße magnetisch-induktive Durchflußmeßgrät gilt nun zunächst, daß, wie in Fig. 3 dargestellt, eine Zusatzstromquelle 14 vorgesehen ist; mittels der Zusatzstromquelle 14 ist unmittelbar zu Beginn einer jeden Halbwelle des als geschalteter Gleichstrom vorliegenden Feldstromes I ein Zusatzstrom I_{Z} in die Feldspulen 5 des Elektromagneten einspeisbar. Im Ausführungsbeispiel besteht die Zusatzstromquelle 14 aus einer Zusatzspannungsquelle 15, einem der Zusatzspannungsquelle 15 nachgeschalteten Speicherkondensator 16 und einem dem Speicherkondensator 16 nachgeschalteten Einspeiseschalter 17. Die Zusatzstromquelle 14 ist in Abhängigkeit von dem durch die Feldspulen 5 des Elektromagneten fließenden Feldstromes I steuerbar. Im einzelnen ist die Spannung U_{Z} der Zusatzspannungsquelle 15, auf die der Speicherkondensator 16 durch die Zusatzspannungsquelle 15 aufgeladen wird, in Abhängigkeit von der Induktivität L und von dem Widerstand R der Feldspulen 5 des Elektromagneten steuerbar.

Im stationären Zustand, d. h. dann, wenn der durch die Feldspulen 5 fließende Feldstrom I dem Feldstromsollwert I_{S} entspricht, befindet sich der Einspeiseschalter 17 im sperrenden Zustand; der Feldstrom I wird durch die Zusatzstromquelle 14 nicht beeinflußt. In jedem dem stationären Zustand folgenden Umschaltzeitpunkt, also unmittelbar zu Beginn einer jeden Halbwelle des als Feldstrom I in den Feldspulen 5 flie-βenden geschalteten Gleichstromes, ist der Einspeiseschalter 17 in den leitenden Zustand steuerbar. Das hat zur Folge, daß aus dem Speicherkondensator 16 ein Zusatzstrom I_{Z} durch die Feldspulen 5 des Elektromagneten fließt; anders ausgedrückt wird aus der in dem Speicherkondensator 16 gespeicherten elektrostatischen Energie in den Feldspulen 5 elektromagnetische Energie, die der dort zunächst noch vorhandenen elektromagnetischen Energie entgegenwirkt, so daß die Umschaltphasen kürzer werden. In dem Augenblick, in dem der durch die Feldspulen 5 des Elektromagneten als Feldstrom I fließende geschaltete Gleichstrom dem Feldstromsollwert I_{S} entspricht, ist der Einspeiseschalter 17 in den sperrenden Zustand steuerbar, so daß von der Zusatzstromquelle 14 kein weiterer Zusatzstrom I_{Z} durch die Feldspulen 5 fließt.

Für das in Fig. 3 schaltungsmäßig schematisch dargestellte Ausführungsbeispiel eines erfindungsgemäßen magnetisch-induktiven Durchflußmeßgerätes gilt nun weiter, daß ein Mikrokontroller 18 vorgesehen ist. Im dargestellten Ausführungsbeispiel ist der Mikrokontroller 18 gleichsam eine zentrale Funktionseinheit des erfindungsgemäßen magnetisch-induktiven Durchflußmeßgerätes. Zunächst ist der Schaltregler 12 in Abhängigkeit von dem durch die Feldspulen 5 fließenden Feldstrom I über einen Analog/Digital-Wandler 19 von dem Mikrokontroller 18 steuerbar. Über den Mikrokontroller 18 ist auch die Umschaltbrücke 13 steuerbar. Schließlich ist auch die Zusatzstromquelle 14 in Abhängigkeit von dem durch die Feldspule 5 des Elektromagneten fließenden Feldstromes I über den Analog/Digital-Wandler 19 von dem Mikrokontroller 18 steuerbar.

Schließlich zeigt die Fig. 3 noch insoweit ein bevorzugtes Ausführungsbeispiel, als den Feldspulen 5 des Elektromagneten ein Magnetfeldsensor zugeordnet ist, z. B. eine Referenzspule 20 und/oder ein Hallsensor 21. Zu dem, was mit einem den Feldspulen 5 zugeordneten Magnetfeldsensor erreichbar ist, wird zur Vermeidung von Wiederholungen auf die deutsche Offenlegungsschrift 197 13 751 verwiesen.

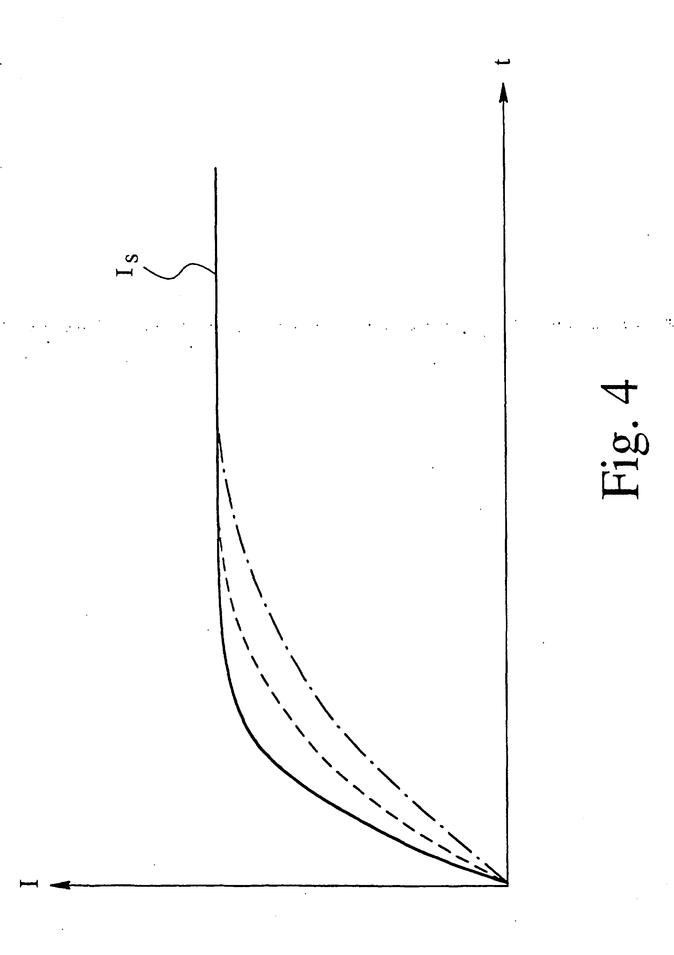

Die graphische Darstellung in Fig. 4 zeigt über der Zeit t den Feldstrom I in den Feldspulen 5 des Elektromagneten eines magnetisch-induktiven Durchflußmeßgerätes.

Strichpunktiert ist der Verlauf des Feldstromes I für den Fall dargestellt, daß an die Feldspulen 5 nur die für den gewollten Feldstromsollwert I_{S} erforderliche Spannung angelegt wird; die Umschaltphase, also die Zeit bis zum Erreichen des Feldstromsollwertes I_{S} ist relativ groß.

Gestrichelt dargestellt ist der Verlauf des Feldstromes I über der Zeit t für das zum Stand der Technik gehörende, in Fig. 2 dargestellte Ausführungsbeispiel, bei dem also ein Stromregler 11 und ein Schaltregler 12 vorgesehen sind. Dadurch, daß im Umschaltzeitpunkt die Spannung an den Feldspulen 5 wesentlich größer ist als für den stationären Zustand, also für die Zeit nach dem Erreichen des Feldstromsollwertes I_{S}, erforderlich, ergibt sich ein steilerer Anstieg des Feldstromes I und damit eine verkürzte Umschaltphase.

Mit einer ausgezogenen Linie ist der Verlauf des Feldstromes I über der Zeit t für den erfindungsgemäßen magnetisch-induktiven Durchflußmesser dargestellt. Dadurch, daß im Umschaltzeitpunkt ein aus der Zusatzstromquelle 14 herrührender Zusatzstrom I_{Z} in die Feldspulen 5 des Elektromagneten eingespeist wird, wird der Anstieg des Feldstromes I nochmals steiler, die Umschaltphase nochmals verkürzt.

## Patentansprüche

1. Magnetisch-induktives Durchflußmeßgerät für strömende Medien (1), mit einem Meßrohr (2), einem der Erzeugung eines zumindest im wesentlichen senkrecht zur Meßrohrachse (3) verlaufenden Magnetfeldes (4) dienenden, eine Feldspule (5) aufweisenden Elektromagneten, einer der Versorgung der Feldspule (5) des Elektromagneten mit einem geschalteten Gleichstrom als Feldstrom (I) dienenden Stromquelle (6), mindestens zwei entlang einer zumindest im wesentlichen senkrecht zur Meßrohrachse (3) und zur Magnetfeldrichtung verlaufenden Verbindungslinie (7) angeordneten Meßelektroden (8) und einer die Meßspannung der Meßelektroden (8) auswertenden, ein Durchflußsignal erzeugenden Auswerteschaltung (10), wobei vorzugsweise ein den Feldstrom (1) regelnder Stromregler (11) und/oder ein die Spannung an der Feldspule (5) des Elektromagneten steuernder oder regelnder Schaltregler (12), und eine der Feldspule (5) des Elektromagneten vorgeschaltete Umschaltbrücke (13) vorgesehen sind bzw. ist, und wobei eine Zusatzstromquelle (14) vorgesehen ist, die Zusatzstromquelle (14) eine Zusatzspannungsquelle (15) aufweist und mittels der Zusatzstromquelle (14) unmittelbar zu Beginn einer jeden Halbwelle des als geschalteter Gleichstrom vorliegenden Feldstromes (I) ein Zusatzstrom (I_{Z}) in die Feldspule (5) des Elektromagneten einspeisbar ist, **dadurch gekennzeichnet, daß** die Spannung (U_{Z}) der Zusatzspannungsquelle (15) in Abhängigkeit von der Induktivität (L) und von dem Widerstand (R) der Feldspule (5) des Elektromagneten steuerbar ist.

2. Magnetisch-induktives Durchflußmeßgerät nach Anspruch 1, **dadurch gekennzeichnet, daß** die Zusatzstromquelle (14) aus der Zusatzspannungsquelle (15), einem der Zusatzspannungsquelle (15) nachgeschalteten Speicherkondensator (16) und einem dem Speicherkondensator (16) nachgeschalteten Einspeiseschalter (17) besteht.

3. Magnetisch-induktives Durchflußmeßgerät nach Anspruch 2, **dadurch gekennzeichnet, daß** der Einspeiseschalter (17) unmittelbar zu Beginn einer jeden Halbwelle des als geschalteter Gleichstrom vorliegenden Feldstromes (I) in den leitenden Zustand steuerbar ist.

4. Magnetisch-induktives Durchflußmeßgerät nach Anspruch 2 oder 3, **dadurch gekennzeichnet, daß** der Einspeiseschalter (17) dann, wenn der durch die Feldspule (5) des Elektromagneten fließende Feldstrom (I) einen Feldstromsollwert (I_{S}) erreicht hat, in den sperrenden Zustand steuerbar ist.

5. Magnetisch-induktives Durchflußmeßgerät nach einem der Ansprüche 1 bis 4, **dadurch gekennzeichnet, daß** ein Mikrokontroller (18) vorgesehen ist.

6. Magnetisch-induktives Durchflußmeßgerät nach Anspruch 5, wobei ein Schaltregler (12) vorgesehen ist, **dadurch gekennzeichnet, daß** der Schaltregler (12) in Abhängigkeit von dem durch die Feldspule (5) des Elektromagneten fließenden Feldstrom (I) über einen Analog/Digital-Wandler (19) von dem Mikrokontroller (18) steuerbar ist.

7. Magnetisch-induktives Durchflußmeßgerät nach Anspruch 5 oder 6, wobei eine Umschaltbrücke (13) vorgesehen ist, **dadurch gekennzeichnet, daß** die Umschaltbrücke (13) über den Mikrokontroller (18) steuerbar ist.

8. Magnetisch-induktives Durchflußmeßgerät nach einem der Ansprüche 5 bis 7, **dadurch gekennzeichnet, daß** die Zusatzstromquelle (14) in Abhängigkeit von dem durch die Feldspule (5) des Elektromagneten fließenden Feldstrom (I) über einen Analog/Digital-Wandler (19) von dem Mikrokontroller (18) steuerbar ist.

9. Magnetisch-induktives Durchflußmeßgerät nach einem der Ansprüche 1 bis 8, **dadurch gekennzeichnet, daß** der Feldspule (5) des Elektromagneten ein Magnetfeldsensor zugeordnet ist, z. B. eine Referenzspule (20) oder ein Hallsensor (21).

## Claims

1. Magnetic/inductive flowmeter for flowing media (1), having a measurement tube (2), an electromagnet which has a field coil (5) and is used to produce a magnetic field (4) which runs at least essentially at right angles to the measurement tube axis (3), a current source (6) which is used to supply the field core (5) of the electromagnet with a switched direct current as the field current (I), at least two measurement electrodes (8) which are arranged along a connecting line (7) which runs at least essentially at right angles to the measurement tube axis (3) and to the magnetic field direction, and an evaluation circuit (10) which evaluates the measurement voltage of the measurement electrodes (8) and produces a flow signal, with a current regulator (11), which regulates the field current (I) and/or a switched-mode regulator (12), which controls or regulates the voltage across the field coil (5) of the electromagnet, and a switching bridge (13) which is connected upstream of the field coil (5) of the electromagnet preferably being provided, and with an additional current source (14) being provided, which additional current source (14) has an additional voltage source (15) and an additional current (I_{z}) can be fed into the field coil (5) of the electromagnet by means of the additional current source (14) immediately at the start of each half-cycle of the field current (I), which is in the form of a switched direct current, **characterized in that** the voltage (U_{z}) of the additional voltage source (15) can be controlled as a function of the inductance (L) and of the resistance (R) of the field coil (5) of the electromagnet.

2. Magnetic/inductive flowmeter according to Claim 1, **characterized in that** the additional current source (14) comprises the additional voltage source (15), an energy-storage capacitor (16) which >is connected downstream from the additional voltage source (15), and a feed switch (17) which is connected downstream from the energy-storage capacitor (16).

3. Magnetic/inductive flowmeter according to Claim 2, **characterized in that** the feed switch (17) can be switched to the on state immediately at the start of each half-cycle of the field current (I), which is in the form of a switched direct current.

4. Magnetic/inductive flowmeter according to Claim 2 or 3, **characterized in that** the feed switch (17) can be switched to the off state when the field current (I) flowing through the field coil (5) of the electromagnet has reached a field current nominal value (I_{S}).

5. Magnetic/inductive flowmeter according to one of Claims 1 to 4, **characterized in that** a microcontroller (18) is provided.

6. Magnetic/inductive flowmeter according to Claim 5, with a switched-mode regulator (12) being provided, **characterized in that** the switched-mode regulator (12) can be controlled by the microcontroller (18) via an analogue/digital converter (19) as a function of the field current (I) flowing through the field coil (5) of the electromagnet.

7. Magnetic/inductive flowmeter according to Claim 5 or 6, with a switching bridge (13) being provided, **characterized in that** the switching bridge (13) can be controlled via the microcontroller (18).

8. Magnetic/inductive flowmeter according to one of Claims 5 to 7, **characterized in that** the additional current source can be controlled by the microcontroller (18) via an analogue/digital converter (19) as a function of the field current (I) flowing through the field coil (5) of the electromagnet.

9. Magnetic/inductive flowmeter according to one of Claims 1 to 8, **characterized in that** the field coil (5) of the electromagnet has an associated magnetic field sensor, for example a reference coil (20) or a Hall sensor (21).

## Revendications

1. Débitmètre électromagnétique pour écoulements de fluides (1), avec un tuyau de mesure (2), un électroaimant présentant une bobine de champ (5) servant à générer un champ magnétique (4) courant au moins essentiellement perpendiculairement à l'axe du tuyau de mesure (3), une source de courant (6) servant à alimenter la bobine de champ (5) de l'électroaimant avec un courant continu commuté en guise de courant de champ (I), au moins deux électrodes de mesure (8) agencées le long d'une ligne de jonction (7) courant au moins essentiellement perpendiculairement à l'axe du tuyau de mesure (3) et à la direction du champ magnétique et un circuit d'analyse (10) générant un signal de débit, analysant la tension de mesure des électrodes de mesure (8), dans lequel sont prévus de préférence un régulateur de courant (11) régulant le courant de champ (I) et/ou un régulateur commutateur (12) commandant ou régulant la tension au niveau de la bobine de champ (5) de l'électroaimant, et un pont de commutation (13) monté en amont de la bobine de champ (5) de l'électroaimant, et dans lequel une source de courant supplémentaire (14) est prévue, la source de courant supplémentaire (14) présente une source de tension supplémentaire (15) et un courant supplémentaire (I_{Z}) peut être injecté dans la bobine de champ (5) de l'électroaimant au moyen de la source de courant supplémentaire (14) immédiatement au début de chaque demi-onde du courant de champ (I) présent sous forme de courant continu commuté, **caractérisé en ce que** la tension (U_{z}) de la source de tension supplémentaire (15) peut être commandée en fonction de l'inductance (L) et de la résistance (R) de la bobine de champ (5) de l'électroaimant.

2. Débitmètre électromagnétique selon la revendication 1, **caractérisé en ce que** la source de courant supplémentaire (14) est constituée de la source de tension supplémentaire (15), d'un condensateur de puissance (16) monté en aval de la source de tension supplémentaire (15) et d'un commutateur d'alimentation (17) monté en aval du condensateur de puissance (16).

3. Débitmètre électromagnétique selon la revendication 2, **caractérisé en ce que** le commutateur d'alimentation (17) peut être mis à l'état passant immédiatement au début de chaque demi-onde du courant de champ (I) présent sous forme de courant continu commuté.

4. Débitmètre électromagnétique selon la revendication 2 ou 3, **caractérisé en ce que** le commutateur d'alimentation (17) peut être mis à l'état de blocage lorsque le courant de champ (I) passant à travers la bobine de champ (5) de l'électroaimant a atteint une valeur de consigne de courant de champ (Is).

5. Débitmètre électromagnétique selon l'une quelconque des revendications 1 à 4, **caractérisé en ce qu'**un microcontrôleur (18) est prévu.

6. Débitmètre électromagnétique selon la revendication 5, dans lequel un régulateur commutateur (12) est prévu, **caractérisé en ce que** le régulateur commutateur (12) peut être commandé par le microcontrôleur (18) par le biais d'un convertisseur analogique/numérique (19) en fonction du courant de champ (I) passant à travers la bobine de champ (5) de l'électroaimant.

7. Débitmètre électromagnétique selon la revendication 5 ou 6, dans lequel un pont de commutation (13) est prévu, **caractérisé en ce que** le pont de commutation (13) peut être commandé par le biais du microcontrôleur (18).

8. Débitmètre électromagnétique selon l'une quelconque des revendications 5 à 7, **caractérisé en ce que** la source de courant supplémentaire (14) peut être commandée par le microcontrôleur (18) par le biais d'un convertisseur analogique/numérique (19) en fonction du courant de champ (I) passant à travers la bobine de champ (5) de l'électroaimant.

9. Débitmètre électromagnétique selon l'une quelconque des revendications 1 à 8, **caractérisé en ce qu'**un capteur de champ magnétique, par exemple une bobine de référence (20) ou un capteur de Hall (21), est associé à la bobine de champ (5) de l'électroaimant.
